# EUROPEAN PATENT SPECIFICATION

(11) **EP 2 038 031 B1**
(45) Date of publication and mention of the grant of the patent: **15.08.2012**
(21) Application number: 06835235.0
(22) Date of filing: 18.12.2006
(51) Int. Cl.: B01D 27/08

(54) **WATER PURIFICATION FILTER ASSEMBLY**
WASSERREINIGUNGSFILTERANORDNUNG
ENSEMBLE FILTRANT DE PURIFICATION D'EAU

(30) Priority: 23.06.2006 KR 20060056985
(43) Date of publication of application: 25.03.2009
(73) Proprietor: Microfilter Co., Ltd, Jincheong-gun, Chungcheongbuk-do 365-842 (KR)
(72) Inventor: KIM, Min-won, Chungcheongbuk-do 365-842 (KR)
(74) Representative: advotec.
(86) International application number: PCT/KR2006/005518
(87) International publication number: WO 2007/148861

(56) References cited:
- WO-A-02/076575
- CA-A1- 2 304 271
- JP-A- 05 096 107
- JP-A- 2002 320 808
- KR-A- 20040 042 498
- US-A- 4 735 716
- US-B1- 6 576 129

## Description

### Technical Field

The present invention relates, in general, to water purification filter assemblies and, more particularly, to a water purification filter assembly which has a structure such that a filter cartridge is easily and removably coupled to a manifold, by which a filter is coupled to a water purifier.

Generally, water purifiers are water purifying apparatuses, which remove foreign substances from drinking water, such as tap water or spring water, and supply the purified water. Such a water purifier includes a filter cartridge, which purifies water in a multistage manner.

The filter cartridge of the water purifier has an inlet port and an outlet port. Furthermore, the filter cartridge selectively includes a preprocess water purification filter, a pre-carbon water purification filter, a membrane water purification filter, or a post-carbon water purification filter, depending on the intended purpose.

In addition, the filter cartridge of the water purifier includes a manifold, which has an inlet passage, through which water is drawn, and an outlet passage, through which water is discharged. A control valve, which controls the flow of water, is provided in the inlet passage.

As well, a circular cap, which has therein a cylindrical space that communicates with the inlet passage and the outlet passage, is provided under the lower end of the manifold. A slide slot is formed in the circumferential inner surface of the circular cap. The filter cartridge is installed in the cylindrical space of the circular cap by inserting a fastening member, which protrudes from the circumferential outer surface of an upper end of the filter cartridge, into the slide slot of the circular cap.

### Background Art

As such, the filter cartridge is coupled to the manifold, thus forming a filter assembly. A representative example of such a filter assembly was proposed in Korean Patent KR 100 52 117 B1 which was filed by the inventor of the present invention.

However, the conventional filter assembly has a problem related to the sliding of the fastening member of the filter cartridge to the slide slot of the circular cap.

In detail, in order to correctly insert the fastening member of the filter cartridge into the slide slot of the circular cap, a user must rotate the filter cartridge in several directions under the circular cap, such that the position of the filter cartridge is adjusted. Therefore, it takes a longer time to replace the filter cartridge with a new one. Moreover, it is very difficult for an inexperienced user to replace the filter cartridge with a new one.

### Disclosure of Invention

### Technical Problem

Accordingly, the present invention has been made keeping in mind the above problems occurring in the prior art, and an object of the present invention is to provide a water purification filter assembly which reduces the time that it takes to replace a filter cartridge with a new one, and makes it easy to replace the filter cartridge.

### Technical Solution

In order to accomplish the above object, the present invention provides a water purification filter assembly with the features of claim 1.

### Advantageous Effects

In the water purification filter assembly of the present invention having the above-mentioned construction, a protrusion, which is provided under the lower end of a circular cap, is seated into a guide groove of a filter cartridge, so that, when the filter cartridge is rotated, because the protrusion is guided by the guide groove, a fastening member of the filter cartridge can be easily inserted into the slide slot of the circular cap. Therefore, the time required to replace the filter cartridge with a new one is reduced. Furthermore, there is an advantage in that even an inexperienced user can replace the filter cartridge with a new one.

### Brief Description of the Drawings

FIG. 1 is an exploded perspective view of a water purification filter assembly, according to an embodiment of the present invention;

FIG. 2 is a perspective view showing part of the water purification filter assembly according to the embodiment of the present invention;

FIG. 3 is a sectional view of FIG. 2; and

FiG. 4 is a bottom exploded perspective view of FIG. 2.

<Description of the elements in the drawings>

100: manifold 110: inlet passage

111: control valve 111a: protrusion tip

120: outlet passage 200: cap

210: cylindrical space 220: slide slot

221: slope part 230: protrusion

240: curved surface part 300: filter cartridge

310: head part 320: filter part

311: inlet hole 312: outlet port

313: fastening member 313a: inclined surface 314: curved groove

320: filter part 321: handle

330: guide groove

### Best Mode for Carrying Out the Invention

Hereinafter, a water purification filter assembly according to a preferred embodiment of the present invention will be described in detail with reference to the attached drawings. In the drawings, the thicknesses of lines or the sizes of elements may be exaggerated to more clearly and conveniently illustrate the present invention. Furthermore, the terms used will be defined in consideration of their functions in the present invention, and thus the definition of these terms may be changed depending on the intention or practice of a user or operator. Therefore, the definitions of the terms must be determined based on the entire content of the specification.

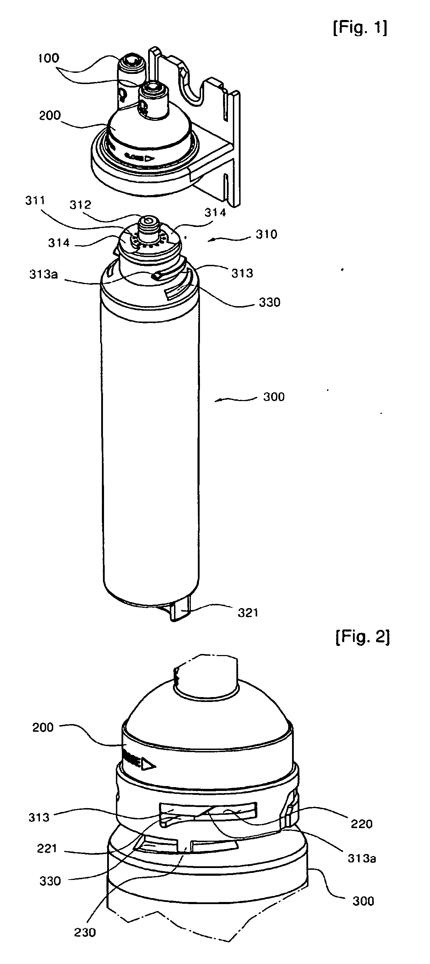

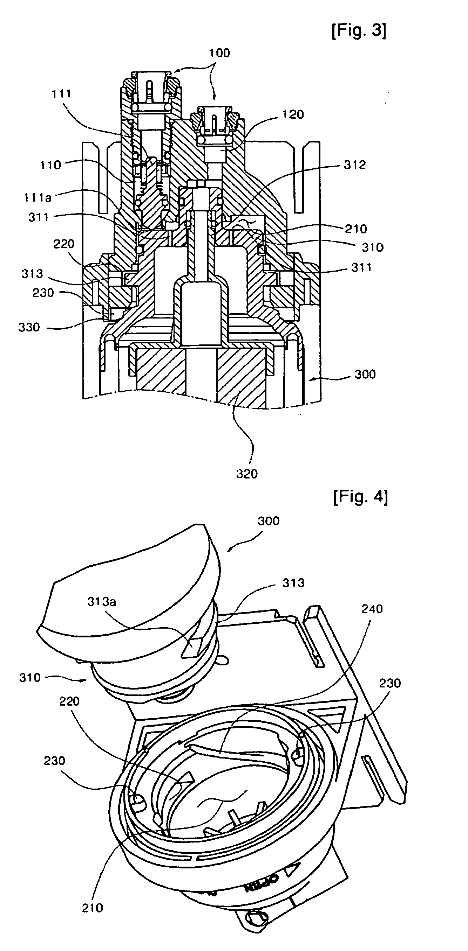

FIG. 1 is an exploded perspective view of a water purification filter assembly according to an embodiment of the present invention. FIG. 2 is a perspective view showing part of the water purification filter assembly according to the embodiment of the present invention. FIG. 3 is a sectional view of FIG. 2. FIG. 4 is a bottom exploded perspective view of FIG. 2.

As shown in the drawings, the water purification filter assembly according to the embodiment of the present invention includes a manifold 100, which is mounted to a water purifier, and a circular cap 200, which is provided under the lower end of the manifold 100, has slide slots 220 therein, and has protrusions 230 on a lower end thereof. The water purification filter assembly further includes a filter cartridge 300, which has a head part 310, coupled to the circular cap 200, and has a filter part 320, in which a filter is installed. The water purification filter assembly further includes fastening members 313, which are provided on the head part 310 to couple the filter cartridge 300 to the circular cap 200, and guide grooves 330, which are formed in the upper surface of the filter part 320 so that the protrusions 230 of the circular cap 200 are inserted into the respective guide grooves 330.

Here, the manifold 100 has therein an inlet passage 110, through which water is drawn, and an outlet passage 120, through which the water is discharged. A control valve 111, which controls the flow of water, is provided in the inlet passage 110.

The circular cap 200 is provided under the lower end of the manifold 100. A cylindrical space 210, which communicates with the inlet passage 110 and the outlet passage 120, is formed in the circular cap 200. Furthermore, the slide slots 220, each of which has a slope part 221 to smoothly guide the associated fastening member 313, is formed in the circumferential inner surface of the circular cap 200. The protrusions 230 are provided under the lower end of the circular cap 200.

The filter cartridge 300 is inserted into the cylindrical space 210 of the circular cap 200. The filter cartridge 300 includes the head part 310, which has therein inlet holes 311, through which water is supplied from the inlet passage 110, and has an outlet port 312, through which water is discharged to the outlet passage 120. The filter cartridge 300 further includes the filter part 320, which has therein the filter for purifying water.

Here, the fastening members 313 protrude at diametrically opposite positions from the circumferential outer surface of the head part 310 of the filter cartridge 300. The fastening members 313 are inserted into the respective slide slots 220 of the circular cap 200, thus fastening the filter cartridge 300 to the circular cap 200.

Furthermore, the guide grooves 330 are formed in curved lines in the upper surface of the filter part 320 of the filter cartridge 300, so that the protrusions 230 of the circular cap 200 are inserted into the respective guide grooves 330. The guide grooves 330 are shaped such that the rotation of the filter cartridge 300 is guided by the protrusions 230.

Here, the guide grooves 330 are preferably formed at diametrically opposite positions in the upper surface of the filter cartridge 300. When the head part 310 of the filter cartridge 300 is inserted into the cylindrical space in the circular cap 200, the protrusions 230, which are provided under the lower end of the circular cap 200, are disposed in right ends of the respective guide grooves 330 to have an arrangement such that the guide grooves 330 protrude to the left from the left ends of the respective slide slots 220.

That is, because the protrusions 230 are inserted into respective guide grooves 330 before the fastening members 313 are inserted into and locked in respective slide slots 220, when the filter cartridge 300 is rotated in a counterclockwise direction, the protrusions 230 slide to the left along the respective guide grooves 330 under the guidance of the guide grooves 330, and the fastening members 313 are rotated in counterclockwise directions and are thus inserted into respective slide slots 220. As a result, the fastening members 313 are locked in respective slide slots 220.

Here, each fastening member 313 has on a right end thereof an inclined surface 313a such that the fastening member 313 can easily enter and slide along the associated slide slot 220. Furthermore, each fastening member 313 also has on a left end thereof an inclined surface 313a such that the fastening member 313 can be easily removed from the associated slide slot 220.

Furthermore, a curved groove 314, which compresses the control valve 111 of the manifold 100 to open the control valve 111 when the filter cartridge is rotated, is formed in a perimeter portion of the upper surface of the head part 310. The curved groove 314 is reduced in depth in the direction in which the curved groove 314 compresses the control valve 111 upwards. Thus, the curved groove 314 serves as a cam having a shape such that it gradually compresses the control valve 111 upwards.

Here, a protrusion tip 111a is provided on the lower end of the control valve 111 to reduce the contact area between the control valve 111 and the curved groove 314. In other words, the protrusion tip 111a is brought into contact with and is compressed by the surface defining the curved groove 314. Here, the protrusion tip 111a serves to reduce frictional force generated by contact between the control valve 111 and the curved groove 314 when the head part 310 is rotated by rotation of the filter cartridge 300, thus facilitating the rotation of the filter cartridge 300, and preventing the control valve 111 from being deformed by frictional force.

At this time, the fastening members 313 provided on the head part 310 of the filter cartridge 300 are inserted into and locked to the respective slide slots 220 of the circular cap 200, thus fastening the filter cartridge 300 to the circular cap 200. During the process of fastening the filter cartridge 300 to the circular cap 200, the control valve 111, which is provided in the inlet passage 110 of the manifold 100, is moved upwards, so that the inlet passage 110 is opened. Hereby, water is supplied into the inlet holes 311 of the filter cartridge 300 through the inlet passage 110. The water, which has been supplied into the inlet holes 311, is purified by the filter and is thereafter discharged into the outlet passage 120 of the manifold 100 through the outlet port 312.

Meanwhile, the inlet holes 311 of the head part 310 are several circular holes, which are formed around the outlet port 312 in a circular arrangement. Thus, when the filter cartridge 300 is rotated in a clockwise direction for replacement of the filter cartridge 300 with a new one, so that the fastening members 313 of the head part 310 are removed from respective slide slots 220 and the filter cartridge 300 is thereby removed from the circular cap 200, water, which is present in the filter cartridge 300, is prevented from being abruptly discharged outside.

In other words, while the filter cartridge 300 is fastened to the circular cap 200, water is forcibly supplied to the filter cartridge 300 by the pump of the water purifier, and thus this water applies predetermined pressure to the interior of the filter cartridge 300. Therefore, when the filter cartridge 300 is removed from the circular cap 200, water, which has been in the filter cartridge 300, is discharged to the outside through the inlet holes 311 of the filter cartridge 300. Here, in the present invention, because the inlet holes 311, each of which has the shape of a relatively small circular hole, are arranged in a circle, the water is prevented from being rapidly discharged through the inlet holes 311.

In addition, a handle 321 for rotation of the filter cartridge 300 is provided under the lower surface of the filter part 320, which is concave, thus making it easy for the user to rotate the filter cartridge using the handle 321. The head part 320 of the filter cartridge 300 can be easily removed from the circular cap 200 by holding and rotating the handle 321.

Meanwhile, the slide slots 220 of the circular cap 200 are connected to respective curved surface parts 240, which are brought into contact with the respective fastening members 313 and are provided on the circumferential inner surface of the circular cap 200 to have downwardly inclined shapes such that the fastening members 313 are guided towards the lower end of the circular cap 200. The inclined surfaces 313a, which correspond to curved surface parts 240, are provided in the respective fastening members 313.

Here, the fastening members 313 are removed from the respective slide slots 220 by rotating the filter cartridge 300 in a counterclockwise direction. At this time, because the slide slots 220 are connected to the respective curved surface parts 220, the fastening members 313 can smoothly slide in directions in which the respective curved surface parts 220 are inclined.

That is, the filter cartridge 300 receives the pressure of water supplied into the inlet holes 311, so that the head part 310 is biased by the pressure of water in the direction in which the head part 310 is separated from the circular cap 200. Therefore, the fastening members 313, which have been removed from the respective slide slots 220 by the rotation of the filter cartridge 300, can be easily moved along the curved surface parts 240 by the pressure of water. Therefore, the filter cartridge 300 can be easily separated from the circular cap 200.

## Claims

1. A water purification filter assembly, comprising:
a manifold (100), having an inlet passage (110), through which water is drawn, and an outlet passage (120), through which the water is discharged, with a control valve (111) provided in the inlet passage to control flow of the water;
a circular cap (200) provided under a lower end of the manifold and having therein a cylindrical space that communicates with the inlet passage and the outlet passage;
a filter cartridge (300), comprising: a head part (310) inserted into the cylindrical space in the circular cap, the head part having an inlet hole (311), into which the water is supplied from the inlet passage, and an outlet port (312), through which the water is discharged into the outlet passage; and a filter part (320) having a filter to purify the water;
a fastening member (313) provided on the head part of the filter cartridge
**characterized in that**
a slide slot (220) is formed in a circumferential inner surface of the circular cap, the slide slot having a slope part (221), with a protrusion (230) provided under a lower end of the circular cap
the fastening member is inserted into the slide slot of the circular cap to fasten the filter cartridge to the circular cap;
and a guide groove (330) formed in an upper surface of the filter part of the filter cartridge in a curved shape, wherein the protrusion (230) of the circular cap is inserted into the guide groove, wherein the rotation of the filter cartridge is guided by the protrusion (230);
wherein the slide slot of the circular cap is connected to a curved surface part (240), which is brought into contact with the fastening member (313) and is provided on the circumferential inner surface of the circular cap to have a downwardly inclined shape, wherein the fastening member is guided towards the lower end of the circular cap, and an inclined surface corresponding to the curved surface part is provided in the fastening member.

2. The water purification filter assembly according to claim 1, wherein the inlet hole of the head part comprises a plurality of circular holes provided around the outlet port in a circular arrangement.

3. The water purification filter assembly according to claim 1, wherein the filter part has a concave lower surface, and a handle for the rotation of the filter cartridge is provided on the lower surface of the filter part.

4. The water purification filter assembly according to claim 1, wherein a curved groove is formed in a perimeter portion of an upper surface of the head part, wherein the curved groove compresses the control valve of the manifold to open the control valve by rotating the head part, and the curved groove is reduced in depth in a direction in which the curved groove compresses the control valve.

5. The water purification filter assembly according to claim 4, wherein a protrusion tip is provided on a lower end of the control valve to reduce a contact area between the control valve and the curved groove of the head part.

## Patentansprüche

1. Filteranordnung zur Wasseraufbereitung, umfassend:
einen Verteiler (100), der einen Einlasskanal (110), durch den Wasser zugeführt wird, und einen Auslasskanal (120), durch den Wasser abgeführt wird, mit einem Regelventil (111), das in dem Einlasskanal zur Regelung der Strömung des Wassers vorgesehen ist, aufweist,
einen kreisförmigen Deckel (200), der unterhalb eines unteren Endes des Verteilers vorgesehen ist und in dem ein zylinderförmiger Raum angeordnet ist, der mit dem Einlasskanal und dem Auslasskanal in Verbindung steht,
eine Filterpatrone (300), umfassend: ein Kopfstück (310), das in den zylinderförmigen Raum in dem kreisförmigen Deckel eingesetzt ist, und das Kopfstück ein Einlassloch (311), dem das Wasser von dem Einlasskanal zugeführt wird, und einen Auslass (312), durch den das Wasser in den Auslasskanal abgeführt wird, aufweist, und ein Filterstück (320), das einen Filter zur Aufbereitung des Wassers aufweist,
ein Befestigungselement (313), das an dem Kopfstück der Filterpatrone vorgesehen ist,
**dadurch gekennzeichnet, dass**
in einer Innenumfangsfläche des kreisförmigen Deckels ein Gleitschlitz (220) ausgebildet ist, und der Gleitschlitz einen abgeschrägten Abschnitt (221) mit einem Vorsprung (230), der unterhalb eines unteren Endes des kreisförmigen Deckels vorgesehen ist, aufweist, und das Befestigungselement in den Gleitschlitz des kreisförmigen Deckels eingesetzt ist, so dass die Filterpatrone an dem ringförmigen Deckel befestigt ist, und eine Führungsnut (330), die in gekrümmter Form auf einer Oberseite des Filterstücks der Filterpatrone ausgebildet ist, wobei der Vorsprung (230) des kreisförmigen Deckels in die Führungsnut eingesetzt ist, wobei die Drehung der Filterpatrone durch den Vorsprung (230) geführt ist, wobei der Gleitschlitz des ringförmigen Deckels mit einem gekrümmten Flächenabschnitt (240) verbunden ist, der mit dem Befestigungselement (313) kontaktiert und auf der Innenumfangsfläche des ringförmigen Deckels mit einer nach unten geneigten Form vorgesehen ist, wobei das Befestigungselement in Richtung des unteren Endes des ringförmigen Deckels geführt ist und eine geneigte Fläche entsprechend dem gekrümmten Flächenabschnitt in dem Befestigungselement vorgesehen ist.

2. Filteranordnung zur Wasseraufbereitung nach Anspruch 1, wobei das Einlassloch des Kopfstücks eine Vielzahl von kreisförmigen Löchern aufweist, die den Auslass umgebend in einer Kreisanordnung vorgesehen sind.

3. Filteranordnung zur Wasseraufbereitung nach Anspruch 1, wobei das Filterstück eine konkave Unterseite aufweist, und ein Griff zur Drehung der Filterpatrone auf der Unterseite des Filterstücks vorgesehen ist.

4. Filteranordnung zur Wasseraufbereitung nach Anspruch 1, wobei in einem Randabschnitt von einer Oberseite des Kopfstücks eine gekrümmte Nut ausgebildet ist, wobei die gebogenen Nut auf das Regelventil des Verteilers Druck ausübt, so dass das Regelventil durch Drehung des Kopfstücks geöffnet wird und die gekrümmte Nut in ihrer Tiefe in eine Richtung, in der die gekrümmte Nut auf das Regelventil Druck ausübt, verkleinert wird.

5. Filteranordnung zur Wasseraufbereitung nach Anspruch 4, wobei eine Vorsprungsspitze an einem unteren Ende des Regelventils vorgesehen ist, so dass ein Kontaktbereich zwischen dem Regelventil und der gekrümmten Nut des Kopfstücks verkleinert wird.

## Revendications

1. Dispositif de filtrage pour la purification de l'eau, comprenant:
un répartiteur (100) présentant un passage d'entrée (110) par lequel de l'eau est alimentée et un passage de sortie (120) par lequel l'eau est rejetée, et présentant une soupape de régulation (111) étant prévue dans le passage d'entrée pour régler l'écoulement de l'eau;
un couvercle circulaire (200) étant prévu au-dessous d'une extrémité inférieure du répartiteur et présentant dans son intérieur un espace cylindrique qui communique avec le passage d'entrée et le passage de sortie;
une cartouche filtrante (300) comprenant: une pièce de tête (310) étant insérée dans l'espace cylindrique dans le couvercle circulaire, la pièce de tête présentant un orifice d'entrée (311) par lequel de l'eau est alimentée à partir du passage d'entrée, et un port de sortie (312) par lequel l'eau est rejetée dans le passage de sortie, et une partie filtrante (320) présentant un filtre pour purifier l'eau;
un élément de fixation (313) étant prévu sur la partie de tête de la cartouche filtrante,
**caractérisé en ce qu'**
une fente de glissement (220) est formée dans une surface intérieure circonférentielle du couvercle circulaire, ladite fente de glissement présentant une partie en pente (221) avec une saillie (230) étant prévue au-dessous d'une extrémité inférieure du couvercle circulaire,
l'élément de fixation étant inséré dans la fente de glissement du couvercle circulaire pour fixer la cartouche filtrante avec le couvercle circulaire;
et une rainure de guidage (330) étant prévue dans une forme courbée sur une surface supérieure de la partie filtrante de la cartouche filtrante, dans lequel la saillie (230) du couvercle circulaire est insérée dans la rainure de guidage, dans lequel la rotation de la cartouche filtrante est guidée par la saillie (230);
dans lequel la fente de glissement du couvercle circulaire est fixée avec une partie de surface (240) courbée qui est mise en contact avec l'élément de fixation (313) et qui est prévue sur la surface intérieure circonférentielle du couvercle circulaire de façon à présenter une forme inclinée vers le bas, dans lequel l'élément de fixation est guidé vers l'extrémité inférieure du couvercle circulaire, et une surface inclinée correspondant à la partie de surface courbée étant prévue dans l'élément de fixation.

2. Dispositif de filtrage pour la purification de l'eau selon la revendication 1, dans lequel l'orifice d'entrée de la partie de tête comprend une pluralité d'orifices circulaires étant prévus autour du port de sortie dans un agencement circulaire.

3. Dispositif de filtrage pour la purification de l'eau selon la revendication 1, dans lequel la partie filtrante présente une surface inférieure concave, et un manche pour la rotation de la cartouche filtrante étant prévu sur la surface inférieure de la partie filtrante.

4. Dispositif de filtrage pour la purification de l'eau selon la revendication 1, dans lequel une rainure courbée est formée dans une zone de bord d'une surface supérieure de la partie de tête, dans lequel la rainure courbée exerce une pression sur la soupape de régulation du répartiteur pour ouvrir la soupape de régulation par la rotation de la partie de tête, et la profondeur de la rainure courbée étant réduite vers une direction, dans laquelle la rainure courbée exerce une pression sur la soupape de régulation.

5. Dispositif de filtrage pour la purification de l'eau selon la revendication 4, dans lequel une pointe de saillie est prévue sur une extrémité inférieure de la soupape de régulation pour réduire la zone de contact entre la soupape de régulation et la rainure courbée de la partie de tête.
